# EUROPEAN PATENT SPECIFICATION

(11) **EP 3 702 637 B1**
(45) Date of publication and mention of the grant of the patent: **20.10.2021**
(21) Application number: 20157994.3
(22) Date of filing: 18.02.2020
(51) Int. Cl.: F16D 65/12

(54) **BRAKE DISK WITH IMPROVED ASSEMBLY**
BREMSSCHEIBE MIT VERBESSERTER MONTAGE
DISQUE DE FREIN À ASSEMBLAGE AMÉLIORÉ

(30) Priority: 19.02.2019 IT 201900002367
(43) Date of publication of application: 02.09.2020
(73) Proprietor: TK RACING ENGINEERING & MANUFACTURING SRL, 20125 Milano (MI) (IT)
(72) Inventor: Mariani, Davide, I-20014 Nerviano (MI) (IT)
(74) Representative: Lampis, Marco

(56) References cited:
- EP-A1- 2 025 965
- CN-A- 104 976 253
- ES-A1- 2 404 150
- TW-B- I 573 724
- US-A1- 2015 047 932

## Description

The present invention relates to a floating brake disc which has a braking band connected in an innovative manner to the corresponding flange for connection to the wheel. In particular, this brake disc may be suitable for use in the motorcycling sector.

The modern floating brake discs are composed of a braking band, where the braking torque is applied, and a connecting flange, which fastens the band to the wheel. Connections for fastening together the band and flange in a floating manner are present at points distributed along the inner circumference of the braking band. A small degree of radial play in the direction of the axis allows the flange, during braking, to be aligned better between the brake pads and also to expand following overheating (even to a significant degree) during the braking action, without producing any deformation which would cause for example brake juddering and loss of efficiency.

Furthermore, the separation of braking band and flange allows less heat to be propagated towards the flange, thus reducing the deformation thereof.

In motorcycles, especially of the high-performance type (for example racing motorcycles), the use of floating braking discs undoubtedly gives rise to many advantages. However, it should also be considered that the rotating mass of the brake disc has a not insignificant impact on the performance of a vehicle.

In the prior art various measures for reducing the mass of brake discs have been proposed. In the case of brake discs of the floating type, a not negligible mass is however concentrated in the means for connecting together braking band and flange. Various connection systems have therefore been proposed, these attempting to take into account the need to reduce the rotating masses, while ensuring at the same time a suitable strength of the structure and a satisfactory degree of simplicity as regards assembly.

For example, it has been proposed using for each connection point a pawl with a shoulder which is axially fixed between the band and the flange in suitably shaped zones so as to allow in any case both axial and radial play. The pawl is fastened to the band with another element, usually an elastic ring, but also with a small plate fixed to the pawl by means of a screw, etc. This system, which is apparently simple, requires in any case various parts which must be assembled together, in addition to both their weight and the complexity of assembly. Moreover, the braking band must have suitably shaped radial projections with semi-circular seats to be coupled precisely with corresponding semi-circular seats of the flange in order for the pawl to be stably housed, something which complicates the machining of the braking band and increases the weight thereof.

Another known system forms the connections by shaping the braking band with several straight projections directed radially towards the axis of the wheel and housed inside special recesses formed in the flange. The recesses present in the flange may be both blind holes and through-holes and the band is fastened to the flange by special plates which are bolted to the flange. Each plate may be for example U-shaped with the bottom of the U which is crossed by the corresponding projection of the braking band and with the two arms of the U which are directed towards the axis of the brake disc so as to be arranged on both sides of the recess and so as to close the recess with the end of the projection in between. The plate is kept in place by a pin which passes through the arms of the U and the flange, with further elements which lock the pin so as to prevent it from coming out. By suitably defining the dimensions of the various parts both axial and radial play between braking band and flange are obtained. The system is, however, somewhat complex, in terms of both structure and assembly, and relatively heavy. Moreover, it is necessary to use fairly long projections to allow suitable sliding of the plate on the corresponding projection during assembly and disassembly.

A further drawback of the various systems is the difficulty of having well-controlled and repeatable axial and/or radial play, also because of the number of parts involved in the fixing system.

A brake disc according to the preamble of claim 1 is known from EP-A-2 025 965.

The general object of the present invention is to provide a brake disc which has a more satisfactory connection between braking band and flange for connection to the wheel and which is simple, light and suitably strong and precise.

In view of this object the idea which has occurred is to provide, according to the invention, a disc brake comprising a braking band and a connecting flange arranged radially inside the braking band, the braking band having projections directed radially towards the action of rotation of the disc and connected in a floating manner to the connecting flange by means of connection systems, a corresponding cradle in the connecting flange, the cradle having an opening emerging from a side surface of the flange for introduction of an end of the projection into the cradle with a direction of movement substantially parallel to the axis of the disc; characterized in that the connection systems comprise for each projection: an elastic ring seated with its peripheral edge inside a groove in an inner side wall of the cradle so as to restrict the opening and prevent the projection from coming out of the cradle (16) through the said opening.

In order to illustrate more clearly the innovative principles of the present invention and its advantages compared to the prior art, an example of embodiment applying these principles will be described below, with reference to the attached drawings. In the drawings:
- Figure 1 shows a schematic perspective view of a brake disc provided in accordance with the principles of the present invention;
- Figure 2 shows a schematic perspective view of a zone for fixing together braking band and flange of the brake disc according to Figure 1;
- Figure 3 shows a schematic exploded view of the connection zone cross-sectioned along the line III-III of Figure 2;
- Figure 4 shows a schematic cross-sectioned view similar to Figure 3, but with the elements assembled;
- Figure 5 shows a schematic view cross-sectioned along the line V-V of Figure 4.

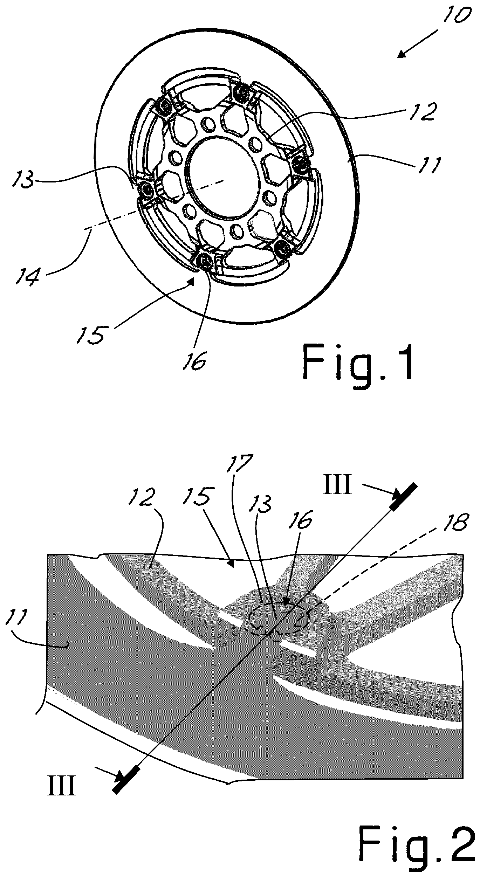

With reference to the figures, Figure 1 shows a floating brake disc according to the invention, denoted generally by 10.

The disc 10 comprises a braking band 11 and a connecting flange 12 which is arranged radially inside the braking band. The connecting flange is intended to be fixed to the wheel using a technique known per se (for example by means of suitable bolts) and therefore will not be further described or shown.

The braking band 11 has projections 13 which are directed radially towards the axis 14 of rotation of the disc so as to be connected in a floating manner to the connecting flange 12 by means of connection systems 15.

The projections 13 are generally arranged angularly spaced along the inner edge of the braking band. For example, these projections may be six or eight in number and are uniformly spaced around the inner circumference of the braking band.

The braking band will be made of suitable material, known for this application; for example a high-strength steel alloy. The band with the projections may be formed as one piece for example by means of shearing, laser cutting or in any case material machining of a solid disc. The connecting flange may be made, again of a suitable material, for example steel or aluminium alloy, by means of material machining (milling) and casting.

As can be clearly seen also in Figure 2, each connection system 15 comprises for each projection 13 a corresponding cradle 16 in the connecting flange 12. Advantageously, these cradles are arranged along the peripheral edge of the flange and preferably are formed as one piece with the flange, as can be seen from the figures.

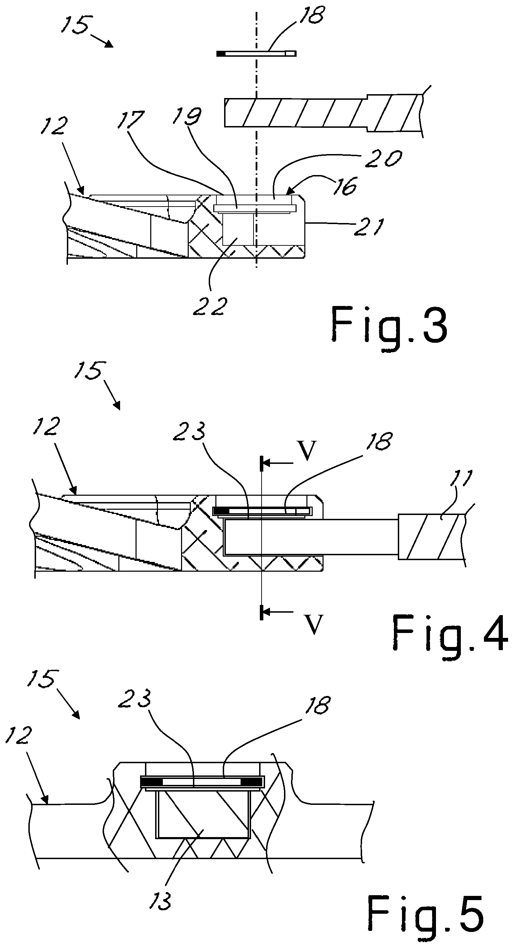

As can be clearly seen for example in Figure 3, the cradle 16 has an opening 17 which emerges from a side surface of the flange (namely in a direction substantially parallel to the axis 14) and which allows the introduction of an end of the projection 13 into the cradle with a direction of movement for insertion which is substantially parallel to the axis 14 of the disc, as is clear also from Figure 3.

The connection system also comprises an elastic ring 18 (preferably an elastic ring with a suitable elasticity in response to radial compression, for example steel), being able to be elastically compressed such that it can be inserted and seated with its peripheral edge inside a groove 19 formed in an inner side wall 20 of the cradle.

The ring is designed with an inner diameter such as to restrict the opening 17 and prevent the projection 13 from coming out of the cradle 16 through the opening 17 once this ring has been inserted in place inside the groove 19.

As can be easily understood from the figures and in particular from Figure 2 where the ring is shown for greater clarity in broken lines, this ring may be advantageously C-shaped. In particular, this ring may be a known Seeger ring, namely a ring with free ends having holes so that the ends can be gripped and elastically moved together by means of a suitable and well-known tool or gripper for Seeger rings.

Preferably the projections 13 are coplanar with the disc and the peripheral plane of the flange 12. As can be clearly seen in Figures 3 and 4, the cradle 16 may therefore have a radial passage 21 directed towards the braking band 11 for the projection 13 which is housed inside the corresponding cradle 16.

Preferably, the C-shaped elastic ring may be seated inside the groove 19 so that the free ends of the C are directed towards the radial passage 21. This facilitates assembly and disassembly, avoiding at the same time accidental disassembly.

As is clear from Figure 2, the end of the projection 13 may be rounded in the plane of the disc and may be housed inside the cradle so as to have a suitable small amount of play in the plane of the disc. In particular, the radial play may be easily determined depending on the need to absorb the thermal expansion of the braking band with respect to the flange. This play will be chosen according to the specific practical working needs of the brake, also depending on the materials used and the operating temperatures of the brake, as may be now easily imagined by the person skilled in the art.

In particular, the cradle 16 may have a bottom seat 22 (considering the bottom in the axial direction of the disc towards the inside of the cradle, namely in the direction of introduction of the projection into the seat through the opening 17 opposite the bottom).

This bottom seat 22 receives the end of the projection 13 with the suitable lateral play. The cradle also has a side wall 20 with the groove 19, which may advantageously have a generally circular shape in plan view (as can be seen for example in Figure 2) and is arranged more towards the opening 17 than the seat 22.

Preferably, between the groove 19 and the seat which houses the projection 13 there may be a distance in the axial direction with respect to the wheel such as to define a desired degree of axial play (namely in a direction parallel to the axis of the disc) of the projection 13 inside the cradle.

This play may also be chosen according to the specific practical working requirements of the brake, also depending on the materials used and the operating temperatures of the brake, as may be now easily imagined by the person skilled in the art.

This play may be provided by means of suitable machining, for example, of the bottom of the seat which houses the projection. It is also possible to envisage a suitable shim ring or calibrated washer 23 inserted inside the cradle together with the projection and with a desired height, so as to obtain a precise axial play which may be varied by simply changing the calibrated washer.

The play in the axial direction of the disc may be provided easily and with great precision during the production of the disc and also modified for example by providing a suitable shim.

This allows very precise control of the axial play of the floating disc according to needs.

At this point it is clear how the objects of the invention are achieved.

Owing to the innovative brake structure according to the invention, a very light weight is ensured. At the same time the structure may be easily made and assembled and is very strong. The connection system may be composed essentially of only three parts, namely cradle, projection and elastic ring which is fixed directly onto the flange.

The system according to the invention is therefore very light. For example, compared to conventional discs, the system according to the invention results in a weight reduction of up to 10% in relation to the total weight of the disc.

For example, in addition to the smaller number of parts, compared to the solution with pawl, the braking band according to the invention is lighter and stronger since it does not require the formation of a seat which completely embraces the pawl.

Compared to the constructional design with bolted plate, plates are also not needed to close the assembly, nor are screws or other types of systems for keying together plate and flange required.

The simple and quick assembly is evident since the fixing system according to the invention may be realized using only one part, namely the elastic ring, which may be rapidly positioned without the need for further elements. The precise positioning of the parts (and therefore also balancing of the disc) is obtained easily owing to the suitably shaped braking band and flange. By means of a calibrated spacer (shim) it is possible to define with great precision the axial play between the band and the elastic ring which closes the projection inside its seat in the cradle. By simply varying the thickness of the shim it is therefore possible to vary the axial play of the brake disc, according to the specific needs. The radial play is determined during the design stage and it is the play, necessary for assembly and thermal expansion, which is present during operation of the braking system.

Finally, with the system according to the invention it is possible to obtain an innovative design which is also well-finished from an aesthetic point of view.

Obviously, the above description of an embodiment applying the innovative principles of the present invention is provided by way of example of these innovative principles and must therefore not be regarded as limiting the scope of the rights claimed herein.

For example, the brake disc described is particularly suitable for motorcycles, but may also be applied advantageously to other types of vehicles, such as motor cars.

The exact configuration of the flange may obviously be different from that shown, depending on both aesthetic and technical needs and the particular assembly of the wheel, as may be easily imagined by the person skilled in the art. The braking band may also have a different configuration compared to that shown and also be provided for example with through-holes for cooling purposes and/or dynamic cleaning of the braking surface, as is well known in the specific technical field.

## Claims

1. Brake disc (10) comprising a braking band (11) and a connecting flange (12) arranged radially inside the braking band, the braking band (11) having projections (13) directed radially towards the axis (14) of rotation of the disc and connected in a floating manner to the connecting flange (12) by means of connection systems (15), a corresponding cradle (16) in the connecting flange (12), the cradle having an opening (17) emerging from a side surface of the flange for introduction of an end of the projection (13) into the cradle with a direction of movement substantially parallel to the axis (14) of the disc;
**characterized in that** the connection systems comprise for each projection (13):
- an elastic ring (18) seated with its peripheral edge inside a groove (19) in an inner side wall (20) of the cradle (16) so as to restrict the opening (17) and prevent the projection (13) from coming out of the cradle (16) through the said opening (17).

2. Brake disc (10) according to Claim 1, **characterized in that** the elastic ring (18) is a C-shaped ring, preferably a Seeger ring.

3. Brake disc (10) according to Claim 1, **characterized in that** the cradle (16) has a radial passage (21) towards the braking band (11) for the projection (13) housed in the cradle (16).

4. Brake disc (10) according to Claims 2 and 3, **characterized in that** the elastic ring (18) has the free ends of the C which are directed towards the radial passage (21).

5. Brake disk (10) according to Claim 1, **characterized in that** the cradle (16) is formed as one piece in a peripheral edge of the flange (12).

6. Brake disc (10) according to Claim 1, **characterized in that** the end of the projection (13) is rounded in the plane of the disc.

7. Brake disc (10) according to Claim 1, **characterized in that** the cradle (16) has a bottom seat (22), which houses the end of the projection (13), and a side wall (20) with said groove (19), having a generally circular shape in plan view and arranged more towards said opening (17) than said seat (22).

8. Brake disc (10) according to Claim 1, **characterized in that** the projection is housed and locked by the elastic ring inside the cradle with a predetermined axial play in a direction parallel to the axis (14) of the disc.

9. Brake disc (10) according to Claim 8, **characterized in that** a shim ring (23) inserted in the cradle is provided for adjusting the axial play.

10. Brake disc (10) according to Claim 1, **characterized in that** a predetermined radial play for absorption of thermal expansion of the braking band (11) with respect to the flange (12) is present between the projection (13) and seat (22).

## Patentansprüche

1. Bremsscheibe (10) umfassend,
ein Bremsband (11) und eine radial innerhalb des Bremsbandes angeordnete Anschlussflansch (12), worin das Bremsband (11) radial zur Drehachse (14) der Scheibe gerichtete Vorsprünge (13) aufweist und mit dem Anschlussflansch (12) über Verbindungssysteme (15) schwimmend verbunden ist,
eine entsprechende Aufnahme (16) in der Verbindungsflansch (12), worin die Aufnahme eine Öffnung (17) aufweist, die von einer Seitenfläche des Flansches ausgeht, um ein Ende des Vorsprungs (13) in die Aufnahme einzuführen, wobei die Bewegungsrichtung im Wesentlichen parallel zur Achse (14) der Scheibe ist;
**dadurch gekennzeichnet, dass** die Verbindungssysteme für jeden Vorsprung (13) umfassen:
- einen elastischen Ring (18), der mit seinem Umfangsrand in einer Nut (19) in einer inneren Seitenwand (20) der Aufnahme (16) sitzt, um die Öffnung (17) zu begrenzen und zu verhindern, dass der Vorsprung (13) durch die Öffnung (17) aus der Aufnahme (16) herauskommt.

2. Bremsscheibe (10) nach Anspruch 1, **dadurch gekennzeichnet, dass** der elastische Ring (18) ein C-förmiger Ring, vorzugsweise ein Seeger-Ring, ist.

3. Bremsscheibe (10) nach Anspruch 1, **dadurch gekennzeichnet, dass** der Käfig (16) einen radialen Durchgang (21) zum Bremsband (11) für den im Käfig (16) untergebrachten Vorsprung (13) aufweist.

4. Bremsscheibe (10) nach Anspruch 2 und 3, **dadurch gekennzeichnet, dass** der elastische Ring (18) die freien Enden des C's aufweist, die zum radialen Durchgang (21) gerichtet sind.

5. Bremsscheibe (10) nach Anspruch 1, **dadurch gekennzeichnet, dass** der Käfig (16) einstückig in einer Umfangskante des Flansches (12) ausgebildet ist.

6. Bremsscheibe (10) nach Anspruch 1, **dadurch gekennzeichnet, dass** das Ende des Vorsprungs (13) in der Scheibenebene abgerundet ist.

7. Bremsscheibe (10) nach Anspruch 1, **dadurch gekennzeichnet, dass** der Käfig (16) einen unteren Sitz (22) aufweist, der das Ende des Vorsprungs (13) aufnimmt, und eine Seitenwand (20) mit der Nut (19), die in der Draufsicht eine allgemein kreisförmige Form hat und mehr zur Öffnung (17) hin angeordnet ist als der Sitz (22).

8. Bremsscheibe (10) nach Anspruch 1, **dadurch gekennzeichnet, dass** der Vorsprung durch den elastischen Ring im Inneren des Trägers mit einem vorbestimmten axialen Spiel in einer Richtung parallel zur Achse (14) der Scheibe aufgenommen und verriegelt ist.

9. Bremsscheibe (10) nach Anspruch 8, **dadurch gekennzeichnet, dass** zur Einstellung des Axialspiels ein in die Aufnahme eingesetzter Passring (23) vorgesehen ist.

10. Bremsscheibe (10) nach Anspruch 1, **dadurch gekennzeichnet, dass** zwischen Vorsprung (13) und Sitz (22) ein vorgegebenes radiales Spiel zur Aufnahme der Wärmedehnung des Bremsbandes (11) gegenüber dem Flansch (12) vorhanden ist.

## Revendications

1. Disque de frein (10) comprenant une bande de freinage (11) et une bride de connexion (12) disposée radialement à l'intérieur de la bande de freinage, le bande de freinage (11) comprenant des saillies (13) orientées radialement en direction de l'axe (14) de rotation du disque et connectées d'une manière flottante à la bride de connexion (12) au moyen de systèmes de connexion (15), un berceau (16) correspondant dans la bride de connexion (12), ce berceau comprenant une ouverture (17) émergeant d'une surface latérale de la bride pour l'introduction d'une extrémité de la saillie (13) dans le berceau avec une direction de déplacement globalement parallèle à l'axe (14) du disque ;
**caractérisé en ce que** les systèmes de connexion comprennent, pour chaque saillie (13) :
- un anneau élastique (18) disposé avec son arête périphérique à l'intérieur d'une rainure (19) dans une paroi latérale interne (20) du berceau (16) de façon à restreindre l'ouverture (17) et à empêcher la saillie (13) de sortir du berceau (16) à travers ladite ouverture (17).

2. Disque de frein (10) selon la revendication 1, **caractérisé en ce que** l'anneau élastique (18) est un anneau en forme de C, de préférence un anneau Seeger.

3. Disque de frein (10) selon la revendication 1, **caractérisé en ce que** le berceau (16) comprend un passage radial (21) en direction de la bande de freinage (11) pour la saillie (13) logée dans le berceau (16).

4. Disque de frein (10) selon les revendications 2 et 3, **caractérisé en ce que** les extrémités libres du C de l'anneau élastique (18) sont orientées vers le passage radial (21).

5. Disque de frein (10) selon la revendication 1, **caractérisé en ce que** le berceau (16) est formé d'une seule pièce dans une arête périphérique de la bride (12).

6. Disque de frein (10) selon la revendication 1, **caractérisé en ce que** l'extrémité de la saillie (13) est arrondie dans le plan du disque.

7. Disque de frein (10) selon la revendication 1, **caractérisé en ce que** le berceau (16) comprend un siège inférieur (22) qui loge l'extrémité de la saillie (13) et une paroi latérale (20) avec ladite rainure (19), présentant une forme générale circulaire en vue plane et disposée plus en direction de ladite ouverture (17) que ledit siège (22).

8. Disque de frein (10) selon la revendication 1, **caractérisé en ce que** la saillie est logée et bloquée par l'anneau élastique à l'intérieur du berceau avec un jeu axial prédéterminé dans une direction parallèle à l'axe (14) du disque.

9. Disque de frein (10) selon la revendication 8, **caractérisé en ce qu'**un anneau d'ajustement (23) inséré dans le berceau est prévu pour l'ajustement du jeu axial.

10. Disque de frein (10) selon la revendication 1, **caractérisé en ce qu'**un jeu radial prédéterminé pour l'absorption de la dilatation thermique de la bande de freinage (11) par rapport à la bride (12) est présent entre la saillie (13) et le siège (22).
